# EUROPÄISCHE PATENTSCHRIFT

(11) **EP 3 251 981 B1**
(45) Veröffentlichungstag und Bekanntmachung des Hinweises auf die Patenterteilung: **26.12.2018**
(21) Anmeldenummer: 17171864.6
(22) Anmeldetag: 19.05.2017
(51) Int. Cl.: B65G 9/00

(54) **LAUFWAGEN FÜR EIN SCHIENENGEFÜHRTES FÖRDERSYSTEM, SOWIE FÖRDERSYSTEM MIT EINEM SOLCHEN LAUFWAGEN**
CARRIAGE FOR A RAIL CONVEYOR SYSTEM, AND CONVEYOR SYSTEM WITH SUCH A CARRIAGE
CHARIOT POUR UN SYSTÈME DE TRANSPORT SUR RAILS ET SYSTÈME DE TRANSPORT COMPRENANT UN TEL CHARIOT

(30) Priorität: 31.05.2016 CH 6942016
(43) Veröffentlichungstag der Anmeldung: 06.12.2017
(73) Patentinhaber: Ferag AG, 8340 Hinwil (CH)
(72) Erfinder: STAUBER, Erwin, 8624 Grüt (CH)
(74) Vertreter: Rentsch Partner AG

(56) Entgegenhaltungen:
- EP-A1- 0 856 480
- WO-A1-2016/030275

## Beschreibung

### TECHNISCHES GEBIET

Die vorliegende Erfindung bezieht sich auf das Gebiet der Fördertechnik. Sie betrifft einen Laufwagen für ein schienengeführtes Fördersystem gemäss dem Oberbegriff des Anspruchs 1.

Sie betrifft weiterhin ein Fördersystem mit einem solchen Laufwagen.

### STAND DER TECHNIK

Bei der Produktion und Nachbearbeitung von Gütern, wie auch bei der Kommissionierung und Verpackung von Aufträgen spielt die automatisierte Förderung von Waren eine wichtige Rolle. Schwerkraftförderer, insbesondere Schwerkrafthängefördersysteme zeichnen sich dabei neben anderem dadurch aus, dass sie eine Verlagerung der Förderung von Waren vom Boden in ansonsten ungenutzte räumliche Bereiche innerhalb oder ausserhalb von Gebäuden ermöglichen. Häufig werden Hängeförderanlagen deshalb über Kopf an Trägern befestigt, die an der Decke, Wänden oder einzelnen am Boden befestigten Säulen angebracht sind.

Hängefördersysteme finden zudem Verwendung als Puffer zwischen zwei oder mehreren Arbeitsprozessen mit unterschiedlichen Geschwindigkeiten. Dadurch können vernetzte Prozesse zeitlich und/oder räumlich entkoppelt werden, womit beispielsweise Störungen in Prozessen behoben werden können, ohne die übrigen Teile einer Prozesskette anhalten zu müssen. Ebenso können damit Taktunterschiede in der Verarbeitung abgefedert werden.

Schwerkrafthängeförderer eignen sich in vielen Bereichen besonders zum Aufbau von Puffern. Dies einerseits aufgrund der bereits erwähnten besseren Raumausnutzung. Andererseits sind sie relativ energiesparend, da sie im Unterschied etwa zu zwangsgeförderten Hängefördersystemen keine den Laufschienen entlang führenden Antriebsmittel wie z.B. Antriebsketten benötigen und meist nur wenige kurze zwangsgeförderte Streckenteile aufweisen. Dadurch können Schwerkrafthängeförderer auch relativ einfach und kostengünstig gezielt auf veränderte Produktionsanforderungen verkleinert oder vergrössert werden.

Für den sicheren Betrieb von Schwerkrafthängeförderern ist es wichtig, dass die verwendeten Transportkörper (auch Shuttles genannt) über gleichbleibend gute Laufeigenschaften verfügen. Insbesondere muss sichergestellt sein, dass Transportkörper auf schwerkraftgeförderten Bahnteilen nicht ungewollt abbremsen oder gar zum Stehen kommen, da dies zu Verzögerungen oder Unterbrüchen in der Förderung führen würde. Als Transportkörper für Schwerkrafthängeförderer werden deshalb meist Laufwagen mit Rädern oder Rollen verwendet, da diese im Allgemeinen einen geringeren Bewegungswiderstand aufweisen als solche mit sogenannten Gleitern, die ihrerseits einen geschwindigkeitsabhängigen Bewegungswiderstand aufweisen.

Aus der Druckschrift WO 2016/030275 A1 der Anmelderin ist ein gattungsgemäßer Laufwagen für einen Förderer bekannt, der einen zum Umgreifen einer Laufschiene ausgebildeten Laufwagenkörper aufweist, welcher einen ersten und einen zweiten Schenkel umfasst, die durch einen Verbindungsabschnitt verbunden sind, wobei der erste Schenkel auf seiner Innenseite angebrachte erste Rollen aufweist und der zweite Schenkel auf seiner Innenseite angebrachte zweite Rollen aufweist und der Verbindungsabschnitt auf seiner Innenseite angebrachte dritte Rollen aufweist. Die ersten und zweiten Rollen sind dabei stehend und die dritten Rollen liegend angeordnet.

Mit der bekannten Lösung wird ein laufsicherer Laufwagen, insbesondere für eine Schwerkraftförderanlage, zur Verfügung gestellt. Ein solcher Laufwagen ist für Güter unterschiedlicher Abmessungen und/oder Massen sowie für Förderstrecken mit nahezu beliebigem Bahnverlauf geeignet. Auch kann ein solcher Laufwagen zu einem relativ niedrigen Stückpreis hergestellt werden. Schliesslich lässt sich mit dem Laufwagen der WO 2016/030275 A1 ein funktionssicheres und einfaches Fördersystem, insbesondere Schwerkraftfördersystem, verwirklichen.

Der aus der WO 2016/030275 A1 bekannte Laufwagen weist mit seinen in Laufrichtung auf gleicher hintereinander angeordneten Rollenpaaren und dem zugehörigen U-förmigen Laufwagenkörper in Laufrichtung eine Länge auf, die sich, wenn im Fördersystem eine Vielzahl von gleichartigen Laufwagen in dichter Folge hintereinander angeordnet werden, zu einer erheblichen Gesamtlänge der Laufwagenreihe aufsummiert. Hierdurch wird beim Einsatz vieler Laufwagen im System eine erhebliche Schienenlänge der Laufschienen belegt, was zu einer erhöhten Ausdehnung des Schienensystems führt.

Darüber hinaus wird, wenn beispielsweise an den Laufwagen hängend einzelne Güter transportiert oder gelagert werden, die in Laufrichtung eine Ausdehnung haben, die deutlich unter der Länge der Laufwagen liegt (z.B. T-Shirts, flache Druckprodukte, o.ä.), beim Transport oder bei der Lagerung im Fördersystem nur eine begrenzte Dichte pro Einheit der Schienenlänge erreicht, die vor allem durch die Länge der Laufwagen in Laufrichtung bestimmt ist.

In der EP 0 856 480 A1 wird ein schienengeführtes Transportmittel, insbesondere zum Fördern von Druckereierzeugnissen, vorgeschlagen, welches einen Transportmittelkörper mit zwei Schenkeln umfasst, welche an den einander zugeordneten Seiten je zwei kreuzweise gegengleich versetzt angeordnete Gleit- oder Rollmittel aufweisen, wobei die Gleit- oder Rollmittel in Verlaufsrichtung der Schenkel derart gegenseitig beabstandet angeordnet sind, dass eine Führungsschiene zwischen den Gleit- oder Rollmitteln Platz findet.

Dieses Transportmittel und eine damit ausgestattete Transportanlage sollen gegenüber vorbekannten Transportmitteln, die relativ gross und schwer ausgestaltet sind und damit den Nachteil aufweisen, dass die Druckereierzeugnisse mit geringer Geschwindigkeit förderbar sind, und dass die Druckereierzeugnisse im Förderstrom einen relativ grossen gegenseitigen Abstand aufweisen und damit die Förderleistung der Transportanlage begrenzen, wirtschaftlich vorteilhafter sein.

Wie allerdings aus den Figuren der EP 0 856 480 A1 erkennbar ist, wird die dichtere Packung der Transportmittel hauptsächlich dadurch erreicht, dass man die Ausdehnung des Transportmittels in Transportrichtung drastisch verringert und die in Laufrichtung hintereinander angeordneten Laufrollen so nah wie möglich aneinander rückt. Zusätzlich wird gemäss Fig. 6 der EP 0 856 480 A1 eine geringfügige Verschachtelung der Transportmittel erreicht.

### DARSTELLUNG DER ERFINDUNG

Es ist daher eine Aufgabe der Erfindung, einen Laufwagen und ein zugehöriges Fördersystem anzugeben, die ohne Einbussen bei der Laufstabilität und Schienenführung eine deutlich höhere Packungsdichte der Laufwagen in einer Laufwagenreihe ermöglichen.

Die Aufgabe wird durch die Merkmale der Ansprüche 1 und 12 gelöst.

Der erfindungsgemässe Laufwagen ist für ein schienengeführtes Fördersystem, insbesondere einen Schwerkraftförderer, vorgesehen, bei welchem Fördersystem eine Mehrzahl von gleichartigen Laufwagen an einer sich in einer Schienenlängsrichtung erstreckenden Laufschiene in Schienenlängsrichtung hintereinander und in Schienenlängsrichtung verfahrbar gelagert sind, wobei der Laufwagen zur Führung in der Laufschiene in Schienenlängsrichtung hintereinander angeordnet einen ersten und einen zweiten Satz von stehenden Laufrollen aufweist, die an einem Laufwagenkörper jeweils quer zur Schienenlängsrichtung um eine zugehörige Achse drehbar gelagert und entlang der zugehörigen Achse voneinander beabstandet sind.

Er ist dadurch gekennzeichnet, dass der innere Abstand der Laufrollen im ersten Laufrollensatz um ein vorbestimmtes Mass grösser ist als der äussere Abstand der Laufrollen im zweiten Laufrollensatz, und dass die Lagerung der ersten und zweiten Laufrollenpaare am Laufwagenkörper derartig ausgebildet ist, dass zwei aufeinanderfolgende Laufwagen platzsparend ineinander geschoben werden können. Hierbeikommt der zweite Laufrollensatz des einen Laufwagens zwischen den aufrollen des ersten Laufrollensatzes des anderen Laufwagens zu liegen.

Durch diese Art der Anordnung der Laufrollen kann eine Verschachtelung benachbarter Laufwagen ohne Rücksicht auf den Abstand der Rollensätze erreicht werden, die bei hoher Stabilität der Laufwagen eine deutlich erhöhte Packungsdichte ermöglicht.

Im einfachsten Fall bilden die Laufrollensätze jeweils ein Laufrollenpaar. Es ist aber auch denkbar, Laufrollensätze mit mehr als zwei Laufrollen pro Satz, insbesondere mit mehreren Laufrollenpaaren, vorzusehen.

Als geeignete Laufschiene kommt vor allem eine Laufschiene in Betracht, wie sie in der WO 2016/030274 A1 der Anmelderin offenbart ist.

Eine Ausgestaltung des Laufwagens nach der Erfindung ist dadurch gekennzeichnet, dass der Laufwagenkörper zum Umgreifen der Laufschiene ausgebildet ist und einen ersten und zweiten Schenkel umfasst, die quer zur Schienenlängsrichtung voneinander beabstandet und durch einen Verbindungsabschnitt miteinander verbunden sind, und dass die Laufrollen des ersten Laufrollensatzes jeweils auf der Innenseite der Schenkel drehbar angeordnet sind.

Insbesondere sind an den Innenseiten der Schenkel neben den Laufrollen des ersten Laufrollensatzes und über die Laufrollen des ersten Laufrollensatzes hinaus nach innen abgehende und in Schienenlängsrichtung abknickende erste Tragwinkel ausgebildet, insbesondere angeformt, an deren freien Enden die Laufrollen des zweiten Laufrollensatzes drehbar angeordnet sind.

Gemäss einer anderen Ausgestaltung können die Laufrollen des ersten und zweiten Laufrollensatzes spiegelsymmetrisch zu einer vertikalen Symmetrieebene des Laufwagens angeordnet sein.

Darüber hinaus kann der Laufwagen einen dritten Laufrollensatz mit einer ersten und zweiten liegenden Laufrolle aufweisen, wobei die liegenden Laufrollen des dritten Laufrollensatzes auf der Innenseite des Verbindungsabschnitts in Schienenlängsrichtung hintereinander angeordnet sind, die Achsen der Laufrollen des dritten Laufrollensatzes in der vertikalen Symmetrieebene des Laufwagens liegen, und die erste liegende Laufrolle um ein vorbestimmtes Mass höher angeordnet ist als die zweite liegenden Laufrolle, so dass, wenn zwei aufeinanderfolgende Laufwagen platzsparend ineinander geschoben werden, die erste liegende Laufrolle des einen Laufwagens über der zweiten liegenden Laufrolle des anderen Laufwagens zu liegen kommt.

Insbesondere kann die zweite liegende Laufrolle direkt auf der Oberseite des Verbindungsabschnitts drehbar angeordnet sein, wobei die erste liegende Laufrolle am freien Ende eines zweiten Tragwinkels drehbar angeordnet ist, der über die zweite liegende Laufrolle hinaus nach innen abgehend und in Schienenlängsrichtung abknickend an der Innenseite des Verbindungsabschnitts ausgebildet, insbesondere angeformt, ist.

Eine andere Ausgestaltung des Laufwagens nach der Erfindung ist dadurch gekennzeichnet, dass am Laufwagenkörper ein Befestigungsabschnitt vorgesehen ist

An diesem Befestigungsabschnitt kann ein zu förderndes Gut lösbar befestigt werden.

Eine weitere Ausgestaltung des Laufwagens nach der Erfindung ist dadurch gekennzeichnet, dass die Laufrollen des ersten Laufrollensatzes als mit einem Rollenkörper umspritzte Kugellager ausgebildet sind.

Insbesondere können die Laufrollen des ersten Laufrollensatzes breiter sein als die Laufrollen des zweiten Laufrollensatzes.

Zusätzlich kann von dem ersten und zweiten Schenkel des Laufwagenkörpers jeweils quer zur Schienenlängsrichtung nach aussen abstehend ein, insbesondere stiftförmiges, Koppelelement angeordnet sein, über welches ein Eingriff auf den Laufwagen mit einem externen Element verwirklich werden kann.

Gemäss einer anderen Ausgestaltung der Erfindung ist der Laufwagenkörper einstückig ausgebildet.

Das Fördersystem gemäss der Erfindung umfasst wenigstens einen Laufwagen nach der Erfindung sowie wenigstens eine auf den Laufwagen abgestimmte Laufschiene.

Wie bereits erwähnt, kann diese Laufschiene wie in der WO 2016/030274 A1 der Anmelderin offenbart ausgebildet sein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer Seitenansicht einen Abschnitt einer Laufschiene eines Fördersystems gemäss einem Ausführungsbeispiel der Erfindung mit einer Mehrzahl von Laufwagen, die nach links zunehmend zu einer maximal dichten Abfolge zusammengeschoben werden;
- Fig. 2: die Konfiguration der Fig. 1 in einer perspektivischen Darstellung, die insbesondere das Querschnittsprofil der Laufschiene offenbart;
- Fig. 3: ein Ausführungsbeispiel eines erfindungsgemässen Laufwagens in einer Ansicht schräg von oben;
- Fig. 4: eine Draufsicht von oben auf den Laufwagen aus Fig. 3;
- Fig. 5: eine perspektivische Ansicht des Laufwagens aus Fig. 3 aus der entgegengesetzten Richtung;
- Fig. 6: eine Ansicht des Laufwagens aus Fig. 3 in Laufrichtung; und
- Fig. 7: eine perspektivische Darstellung des Laufwagens aus Fig. 3 mit den eingezeichneten Ebenen für die Laufrollensätze und die eingezeichnete Symmetrieebene.

### WEGE ZUR AUSFÜHRUNG DER ERFINDUNG

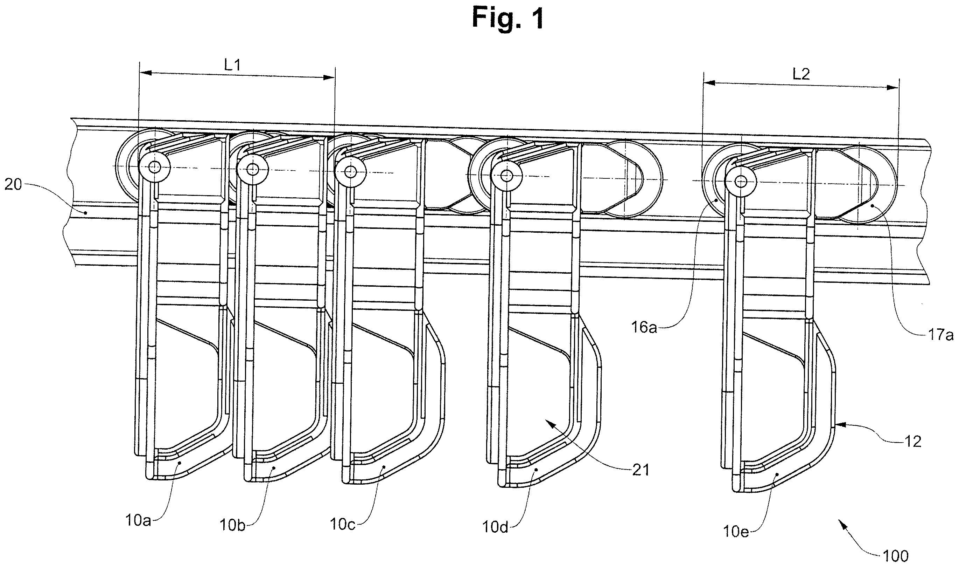

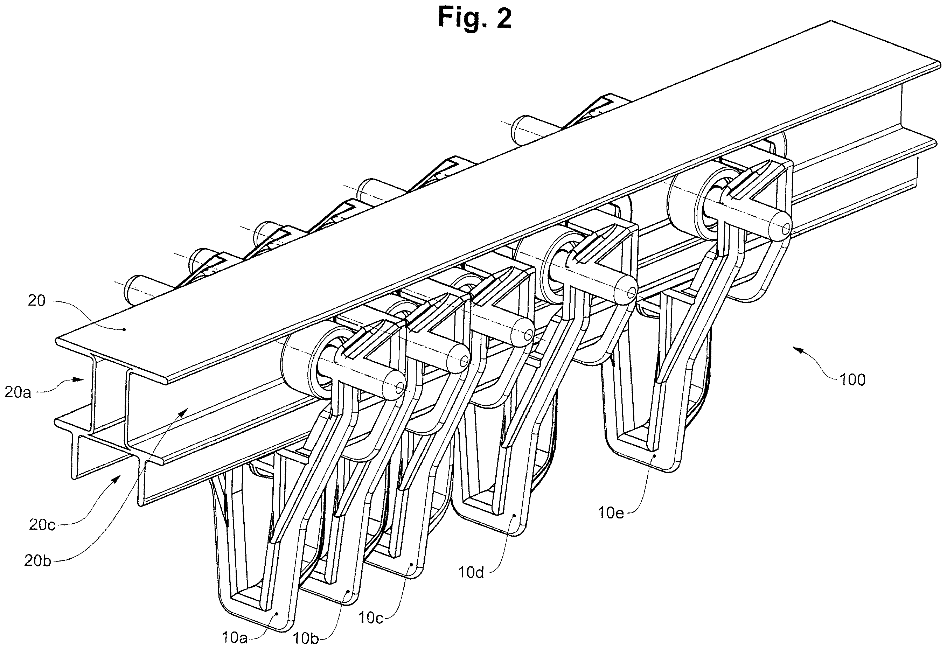

In Fig. 1 und Fig. 2 ist ein Ausschnitt aus einem Fördersystem bzw. Förderer 100 gemäss einem Ausführungsbeispiel der Erfindung in einer Seitenansicht (Fig. 1) und einer perspektivischen Ansicht schräg von oben (Fig. 2) wiedergegeben. Die Figuren zeigen einen Abschnitt einer sich gerade in einer Schienenlängsrichtung erstreckenden Laufschiene 20, die zwei einander gegenüberliegende, seitliche, nach aussen offene, U-förmige Führungskanäle 20a und 20b sowie einen mittigen, nach unten offenen, U-förmigen Führungskanal 20c umfasst. Die Führungskanäle 20a, 20b und 20c erstrecken sich parallel in Schienenlängsrichtung (weitere Einzelheiten zu der Laufschiene können der WO 2016/030274 A1 entnommen werden).

An der Laufschiene 20 in Schienenlängsrichtung verfahrbar gelagert sind mehrere gleichartige Laufwagen 10a-e, von denen die linken drei Laufwagen 10a, 10b und 10c in maximaler Dichte ineinander verschachtelt dargestellt sind, während die übrigen Laufwagen 10d und 10e unverschachtelt und mit genügendem Abstand voneinander frei beweglich sind. Aus der Fig. 1 lässt sich durch Vergleich der Laufwagen 10a-c mit dem Laufwagen 10d oder 10e entnehmen, dass in der verschachtelten Anordnung zwei Laufwagen in etwa dieselbe Länge L1 in Laufrichtung einnehmen, wie ein einzelner Laufwagen lang ist (Länge L2). Gegenüber der in der WO 2016/030275 A1 offenbarten Konfiguration ergibt sich somit für das hier gezeigte Ausführungsbeispiel eine Erhöhung der Packungsdichte für die Laufwagen um den Faktor 2.

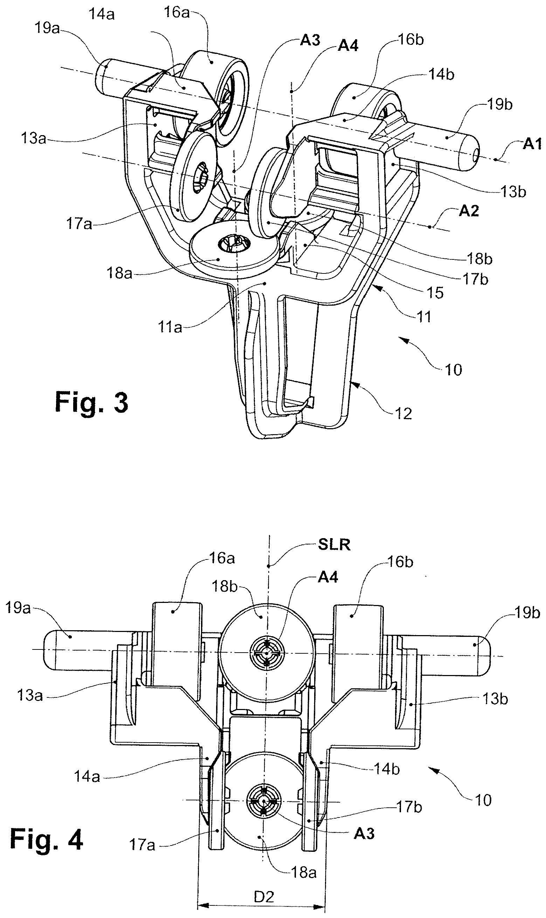

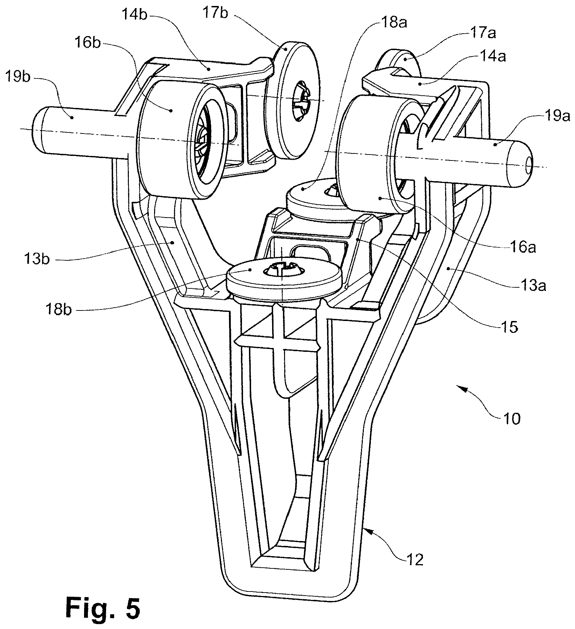

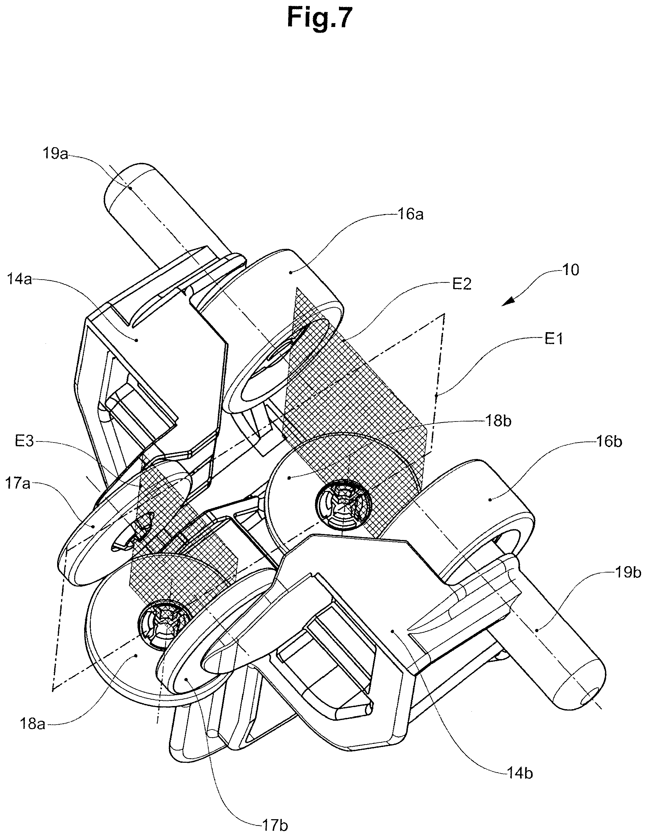

Der Aufbau eines einzelnen Laufwagens 10 gemäss Ausführungsbeispiel ergibt sich aus den Fig. 3-7. Der zu einer vertikalen Symmetrieebene (E1 in Fig. 7) symmetrisch aufgebaute Laufwagen 10 weist zur Führung in der Laufschiene 20 und zur Aufnahme und Einleitung der Traglast in die Laufschiene 20 in Schienenlängsrichtung SLR hintereinander angeordnet einen ersten und einen zweiten Satz von stehenden Laufrollen 16a, 16b bzw. 17a, 17b auf, die im Beispiel als Paare ausgebildet sind. Der erste Laufrollensatz 16a, 16b ist in einer ersten vertikalen und senkrecht zur Laufrichtung orientierten Ebene E2 (Fig. 7) angeordnet. Der zweite Laufrollensatz 17a, 17b ist in einer zweiten vertikalen und senkrecht zur Laufrichtung orientierten Ebene E3 (Fig. 7) angeordnet.

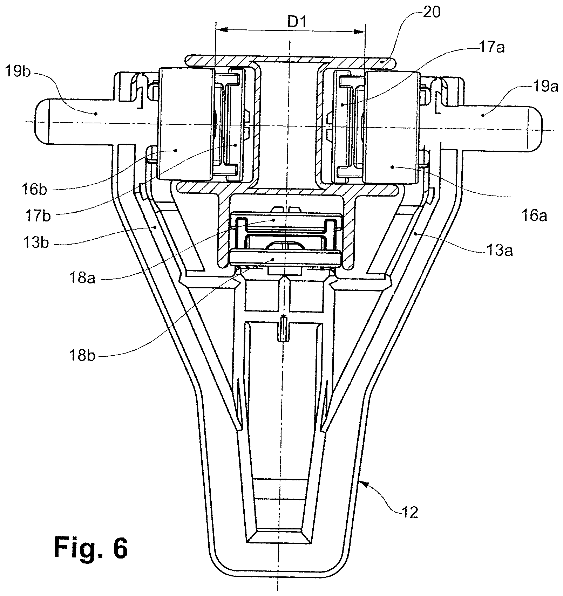

Die Laufrollen 16a,b und 17a,b sind an einem die Laufschiene 20 von unten umfassenden Laufwagenkörper 11 jeweils quer zur Schienenlängsrichtung in den Ebenen E2 und E3 um eine zugehörige Achse (A1 bzw. A2) drehbar gelagert und entlang der zugehörigen Achse (A1 bzw. A2) voneinander beabstandet. Der innere Abstand (D1 in Fig. 6) der Laufrollen 16a,b im ersten Laufrollensatz ist um ein vorbestimmtes Mass grösser ist als der äussere Abstand (D2 in Fig. 4) der Laufrollen 17a,b im zweiten Laufrollensatz. Dieses Mass ist so gewählt, dass das zweite Laufrollensatz 17a,b eines benachbarten Laufwagens zwischen den Laufrollen 16a,b des ersten Laufrollensatzes aufgenommen werden kann. Um dies zu ermöglichen, ist die Lagerung der ersten und zweiten Laufrollensätze 16a,b bzw. 17a,b am Laufwagenkörper 11 derartig ausgebildet, dass zwei aufeinanderfolgende Laufwagen (z.B. die Laufwagen 10a und 10b in Fig. 1) platzsparend ineinander geschoben werden können, indem der zweite Laufrollensatz 17a,b des einen Laufwagens 10a zwischen dem ersten Laufrollensatz 16a,b des anderen Laufwagens 10b zu liegen kommt.

Der Laufwagenkörper 11, der - wie bereits erwähnt - zum Umgreifen der Laufschiene 20 ausgebildet ist, weist einen ersten und zweiten Schenkel 13a und 13b auf. Die beiden Schenkel sind quer zur Schienenlängsachse bzw. Schienenlängsrichtung voneinander beabstandet und durch einen Verbindungsabschnitt 11a miteinander verbunden. Die Laufrollen 16a,b des ersten Laufrollensatzes sind dabei jeweils auf der Innenseite der Schenkel 13a,b drehbar angeordnet.

Die Laufrollen 16a,b des ersten Laufrollensatzes, die aufgrund der Geometrie des Laufwagenkörpers 11 den grössten Teil der Traglast aufnehmen, sind um ein Mehrfaches breiter als die Laufrollen 17a,b des zweiten Laufrollensatzes. Insbesondere sind die Laufrollen 16a,b des ersten Laufrollensatzes kugelgelagert, vorzugsweise als mit einem Rollenkörper umspritzte Kugellager ausgebildet. Die Laufrollen 17a,b des zweiten Laufrollensatzes sind demgegenüber eher als schmale Räder ausgeführt, die ohne spezielle Lagerungsmittel auf einer Achse drehbar gelagert sind.

Damit die Laufrollen 17a,b des zweiten Laufrollensatzes gegenüber den Laufrollen 16a,b des ersten Laufrollensatzes jeweils nach innen versetzt angeordnet werden können, sind an den Innenseiten der Schenkel 13a,b neben den Laufrollen 16a,b des ersten Laufrollensatzes und über die Laufrollen 16a,b des ersten Laufrollensatzes hinaus nach innen abgehende und in Schienenlängsrichtung SLR abknickende erste Tragwinkel 14a,b ausgebildet, insbesondere angeformt, an deren freien Enden auf der Innenseite die Laufrollen 17a,b des zweiten Laufrollensatzes drehbar angeordnet sind.

Während der Laufwagen 10 mit den Laufrollen 16a,b des ersten Laufrollensatzes und den Laufrollen 17a,b des zweiten Laufrollensatzes in den seitlichen Führungskanälen 20a und 20b der Laufschiene 20 gelagert ist und läuft, ist an dem Laufwagen 10 ein dritter Laufrollensatz mit einer ersten und zweiten liegenden Laufrolle 18a und 18b vorgesehen, welcher von dem unteren Führungskanal 20c der Laufschiene 20 aufgenommen wird. Die liegenden Laufrollen 18a,b des dritten Laufrollensatzes, die ebenfalls als schmale Laufräder ausgebildet sind, sind auf der Innenseite des Verbindungsabschnitts 11a in Schienenlängsrichtung SLR hintereinander angeordnet. Die Achsen A3 und A4 der Laufrollen 18a,b des dritten Laufrollensatzes liegen vorzugsweise in der vertikalen Symmetrieebene E1, zu der auch die Laufrollen 16a,b und 17a,b des ersten und zweiten Laufrollensatzes spiegelsymmetrisch angeordnet sind. Die Achsen A3 und A4 der Laufrollen 18a,b des dritten Laufrollensatzes können aber auch zur Beeinflussung des Laufverhaltens, insbesondere zum Zwecke der Selbstzentrierung, schräg zur Symmetrieebene E1 stehen.

Die erste liegende Laufrolle 18a ist um ein vorbestimmtes Mass höher angeordnet als die zweite liegenden Laufrolle 18b, so dass, wenn zwei aufeinanderfolgende Laufwagen wie z.B. die Laufwagen 10a und 10b, platzsparend ineinander geschoben werden, die erste liegende Laufrolle 18a des einen Laufwagens 10a über der zweiten liegenden Laufrolle 18b des anderen Laufwagens 10b zu liegen kommt.

Um die beschriebene Abstufung in der Höhe zu erreichen, ist die zweite liegende Laufrolle 18b direkt auf der Oberseite des Verbindungsabschnitts 11a drehbar angeordnet, während die erste liegende Laufrolle 18a am freien Ende eines zweiten Tragwinkels 15 drehbar angeordnet ist, der über die zweite liegende Laufrolle 18b hinaus nach innen abgehend und in Schienenlängsrichtung SLR abknickend an der Innenseite des Verbindungsabschnitts 11a ausgebildet, insbesondere angeformt, ist.

Damit am Laufwagen 10 hängend entsprechende Güter transportiert werden können, ist am Laufwagenkörper 11 von dem Verbindungsabschnitt 11a nach unten abgehend ein Befestigungsabschnitt 12 in Form einer Öse bzw. eines Auges 21 vorgesehen, an welchem ein zu förderndes Gut lösbar befestigt, z.B. eingehakt werden kann. Wird etwas in die Öse eingehängt, rutscht es aufgrund der Form der Öse 21 von selbst in die tiefste Position, die sich unterhalb der Laufrollen 16a,b des ersten Laufrollensatzes befindet, so dass eine direkte Lasteinleitung in diese Rollen gewährleistet ist.

Damit der in der Laufschiene 20 laufende Laufwagen 10 von aussen mechanisch beeinflussbar ist oder nach aussen mechanisch Einfluss ausüben kann, ist von dem ersten und zweiten Schenkel 13a und 13b jeweils quer zur Schienenlängsrichtung SLR nach aussen abstehend ein, insbesondere stiftförmiges, Koppelelement 19a bzw. 19b angeordnet, über welches ein Eingriff auf den Laufwagen 10 mit einem externen Element verwirklich werden kann. Andere Arten der Koppelelemente sind aber auch denkbar.

Der Laufwagenkörper 11 ist vorzugsweise als einstückiges Gussteil ausgebildet und kann aus einem geeigneten Kunststoff aber auch aus Metall bestehen.

Das mit den erfindungsgemässen Laufwagen aufgebaute Fördersystem zeichnet sich nicht nur durch einen funktionssicheren, verschleissarmen Betrieb, insbesondere auch mittels Schwerkraftförderung, aus, sondern ermöglicht vor allem wegen der Verschachtelungsfunktion der Laufwagen höhere Förderleistungen und eine deutlich erhöhte Lagerdichte.

## Patentansprüche

1. Laufwagen (10)für ein schienengeführtes Fördersystem (100), insbesondere einen Schwerkraftförderer, bei welchem Fördersystem (100) eine Mehrzahl von gleichartigen Laufwagen (10a-e) an einer sich in einer Schienenlängsrichtung erstreckenden Laufschiene (20) in Schienenlängsrichtung hintereinander und in Schienenlängsrichtung verfahrbar gelagert sind, wobei der Laufwagen (10) zur Führung in der Laufschiene (20) in Schienenlängsrichtung (SLR) hintereinander angeordnet einen ersten und einen zweiten Satz von stehenden Laufrollen (16a,b; 17a,b) aufweist, die an einem Laufwagenkörper (11) jeweils quer zur Schienenlängsrichtung um eine zugehörige Achse (A1 bzw. A2) drehbar gelagert und entlang der zugehörigen Achse (A1 bzw. A2) voneinander beabstandet sind, **dadurch gekennzeichnet, dass** der innere Abstand (D1) der Laufrollen im ersten Laufrollensatz (16a,b) um ein vorbestimmtes Mass grösser ist als der äussere Abstand (D2) der Laufrollen im zweiten Laufrollensatz (17a,b), und dass die Lagerung der ersten und zweiten Laufrollensätze (16a,b; 17a,b) am Laufwagenkörper (11) derartig ausgebildet ist, dass zwei aufeinanderfolgende Laufwagen (10a-f) platzsparend ineinander geschoben werden können, indem der zweite Laufrollensatz (17a,b) des einen Laufwagens (10a) zwischen den Laufrollen des ersten Laufrollensatzes (16a,b) des anderen Laufwagens (10b) zu liegen kommt.

2. Laufwagen nach Anspruch 1, **dadurch gekennzeichnet, dass** der Laufwagenkörper (11) zum Umgreifen der Laufschiene (20) ausgebildet ist und einen ersten und zweiten Schenkel (13a, 13b) umfasst, die quer zur Schienenlängsrichtung voneinander beabstandet und durch einen Verbindungsabschnitt (11a) miteinander verbunden sind, und dass die Laufrollen (16a,b) des ersten Laufrollensatzes jeweils auf der Innenseite der Schenkel (13a,b) drehbar angeordnet sind.

3. Laufwagen nach Anspruch 2, **dadurch gekennzeichnet, dass** an den Innenseiten der Schenkel (13a,b) neben den Laufrollen (16a,b) des ersten Laufrollensatzes und über die Laufrollen (16a,b) des ersten Laufrollensatzes hinaus nach innen abgehende und in Schienenlängsrichtung (SLR) abknickende erste Tragwinkel (14a,b) ausgebildet, insbesondere angeformt, sind, an deren freien Enden die Laufrollen (17a,b) des zweiten Laufrollensatzes drehbar angeordnet sind.

4. Laufwagen nach Anspruch 1, **dadurch gekennzeichnet, dass** die Laufrollen (16a,b; 17a,b) des ersten und zweiten Laufrollensatzes spiegelsymmetrisch zu einer vertikalen Symmetrieebene (E1) des Laufwagens (10) angeordnet sind.

5. Laufwagen nach Anspruch 4, **dadurch gekennzeichnet, dass** der Laufwagen einen dritten Laufrollensatz mit einer ersten und zweiten liegenden Laufrolle (18a,b) aufweist, dass die liegenden Laufrollen (18a,b) des dritten Laufrollensatzes auf der Innenseite des Verbindungsabschnitts (11a) in Schienenlängsrichtung (SLR) hintereinander angeordnet sind, dass die Achsen (A3, A4) der Laufrollen (18a,b) des dritten Laufrollensatzes in der vertikalen Symmetrieebene (E1) des Laufwagens (10) liegen, und dass die erste liegende Laufrolle (18a) um ein vorbestimmtes Mass höher angeordnet ist als die zweite liegenden Laufrolle (18b), so dass, wenn zwei aufeinanderfolgende Laufwagen (10a-f) platzsparend ineinander geschoben werden, die erste liegende Laufrolle (18a) des einen Laufwagens über der zweiten liegenden Laufrolle (18b) des anderen Laufwagens zu liegen kommt.

6. Laufwagen nach Anspruch 5, **dadurch gekennzeichnet, dass** die zweite liegende Laufrolle (18b) direkt auf der Oberseite des Verbindungsabschnitts (11a) drehbar angeordnet ist, und dass die erste liegende Laufrolle (18a) am freien Ende eines zweiten Tragwinkels (15) drehbar angeordnet ist, der über die zweite liegende Laufrolle (18b) hinaus nach innen abgehend und in Schienenlängsrichtung (SLR) abknickend an der Innenseite des Verbindungsabschnitts (11a) ausgebildet, insbesondere angeformt, ist.

7. Laufwagen nach einem der Ansprüche 1 bis 6, **dadurch gekennzeichnet, dass** am Laufwagenkörper (11) ein Befestigungsabschnitt (12) vorgesehen ist.

8. Laufwagen nach einem der Ansprüche 1 bis 7, **dadurch gekennzeichnet, dass** die Laufrollen des ersten Laufrollensatzes (16a,b) als mit einem Rollenkörper umspritzte Kugellager ausgebildet sind.

9. Laufwagen nach Anspruch 8, **dadurch gekennzeichnet, dass** die Laufrollen des ersten Laufrollensatzes (16a,b) breiter sind als die Laufrollen des zweiten Laufrollensatzes (17a,b).

10. Laufwagen nach Anspruch 2, **dadurch gekennzeichnet, dass** von dem ersten und zweiten Schenkel (13a, 13b) jeweils quer zur Schienenlängsrichtung nach aussen abstehend ein, insbesondere stiftförmiges, Koppelelement (19a,b) angeordnet ist, über welches ein Eingriff auf den Laufwagen (10) mit einem externen Element verwirklich werden kann.

11. Laufwagen nach einem der Ansprüche 1 bis 10, **dadurch gekennzeichnet, dass** der Laufwagenkörper (11) einstückig ausgebildet ist.

12. Fördersystem, umfassend wenigstens einen Laufwagen (10; 10a-e) nach einem der Ansprüche 1 bis 11 sowie wenigstens eine auf den Laufwagen (10; 10a-e) abgestimmte Laufschiene (20).

## Claims

1. A carriage (10) for a track-mounted conveyor system (100), particularly a gravity conveyor, in which conveyor system (100) a plurality of identical carriages (10a-e) are mounted on a running rail (20) extending in the longitudinal track direction such that they are arranged behind one another in the longitudinal track direction and displaceable in the longitudinal track direction, wherein the carriage (10) comprises a first and a second set of vertical rollers (16a,b; 17a,b), which are arranged behind one another in the longitudinal track direction (SLR), in order to guide the carriage in the running rail (20), and wherein said roller sets are respectively mounted on a carriage body (11) such that they are rotatable transverse to the longitudinal track direction about an associated axis (A1 or A2) and spaced apart from one another along the associated axis (A1 or A2), **characterized in that** the inner spacing (D1) of the rollers in the first roller set (16a,b) is greater than the outer spacing (D2) of the rollers in the second roller set (17a,b) by a predefined dimension, and **in that** the mounting of the first and the second roller sets (16a,b; 17a,b) on the carriage body (11) is realized in such a way that two successive carriages (10a-f) can be pushed into one another in a space-saving manner **in that** the second roller set (17a,b) of one carriage (10a) comes to lie between the rollers of the first roller set (16a,b) of the other carriage (10b).

2. The carriage according to claim 1, **characterized in that** the carriage body (11) is designed for encompassing the running rail (20) and comprises a first and a second leg (13a; 13b), which are spaced apart from one another transverse to the longitudinal track direction and connected to one another by means of a connecting section (11a), and **in that** the rollers (16a,b) of the first roller set respectively are rotatably arranged on the inner side of the legs (13a,b) .

3. The carriage according to claim 2, **characterized in that** first angle supports (14a,b), which extend inward beyond the rollers (16a,b) of the first roller set and are angled in the longitudinal track direction (SLR), are formed, particularly integrally formed, on the inner sides of the legs (13a,b) adjacent to the rollers (16a,b) of the first roller set, wherein the rollers (17a,b) of the second roller set are rotatably arranged on the free ends of said angle supports.

4. The carriage according to claim 1, **characterized in that** the rollers (16a,b; 17a,b) of the first and the second roller set are arranged mirror-symmetrical to a vertical plane of symmetry (E1) of the carriage (10).

5. The carriage according to claim 4, **characterized in that** the carriage comprises a third roller set with a first and a second horizontal roller (18a,b), **in that** the horizontal rollers (18a,b) of the third roller set are arranged on the inner side of the connecting section (11a) behind one another in the longitudinal track direction (SLR), **in that** the axes (A3, A4) of the rollers (18a,b) of the third roller set lie in the vertical plane of symmetry (E1) of the carriage (10), and **in that** the first horizontal roller (18a) is arranged higher than the second horizontal roller (18b) by a predefined dimension such that the first horizontal roller (18a) of one carriage comes to lie above the second horizontal roller (18b) of the other carriage when two successive carriages (10a-f) are pushed into one another in a space-saving manner.

6. The carriage according to claim 5, **characterized in that** the second horizontal roller (18b) is rotatably arranged directly on the upper side of the connecting section (11a), and **in that** the first horizontal roller (18a) is rotatably arranged on the free end of a second angle support (15), which is formed, particularly integrally formed, on the inner side of the connecting section (11a) such that it extends inward beyond the second horizontal roller (18b) and is angled in the longitudinal track direction (SLR).

7. The carriage according to one of claims 1-6, **characterized in that** a fastening section (12) is provided on the carriage body (11).

8. The carriage according to one of claims 1-7, **characterized in that** the rollers of the first roller set (16a,b) are realized in the form of ball bearings, around which a roller body is injection-molded.

9. The carriage according to claim 8, **characterized in that** the rollers of the first roller set (16a,b) are wider than the rollers of the second roller set (17a,b).

10. The carriage according to claim 2, **characterized in that** a coupling element (19a,b), particularly a pin-shaped coupling element, is arranged such that it respectively protrudes outward from the first and the second leg (13a, 13b) transverse to the longitudinal track direction, wherein said coupling element makes it possible to realize an engagement of the carriage (10) with an external element.

11. The carriage according to one of claims 1-10, **characterized in that** the carriage body (11) is realized in one piece.

12. A conveyor system comprising at least one carriage (10; 10a-e) according to one of claims 1-11, as well as at least one running rail (20) that is adapted to the carriage (10; 10a-e).

## Revendications

1. Chariot (10) pour système de convoyage sur rail (100), en particulier convoyeur gravitaire, dans lequel système de convoyage (100) une pluralité de chariots similaires (10a-e) s'appuient de manière à pouvoir se déplacer dans un rail de roulement (20), en s'étendant les uns derrière les autres dans un sens longitudinal du rail, et dans le sens longitudinal des rails, le chariot (10) présentant, pour son guidage dans le rail (20) dans le sens longitudinal du rail (SLR), disposés derrière l'autre, un premier et un deuxième jeu de rouleaux (16a,b ; 17a,b) qui s'appuient de manière à pouvoir tourner au niveau d'un corps de chariot (11) respectivement transversalement par rapport au sens longitudinal du rail autour d'un axe correspondant (A1 ou A2) et sont espacés les uns des autres le long de l'axe correspondant (A1 ou A2), **caractérisé en ce que** la distance intérieure (D1) entre les rouleaux dans le premier jeu de rouleaux (16a,b) est supérieure à raison d'une mesure prédéterminée à la distance extérieure (D2) entre les rouleaux dans le deuxième jeu de rouleaux (17a,b) et que l'appui des premier et deuxième jeux de rouleaux (16a,b ; 17a,b) au niveau du corps de chariot (11) est réalisée de manière à ce que deux chariots se succédant (10a-f) puissent être poussés l'un dans l'autre en économisant de la place par le fait que le deuxième jeu de rouleaux (17a,b) d'un chariot (10a) vient se poser entre les rouleaux du premier jeu de rouleaux (16a,b) de l'autre chariot (10b).

2. Chariot selon la revendication 1, **caractérisé en ce que** le chariot (11) est conçu pour entourer le rail (20) et comprend une première et une seconde branche (13a, 13b), lesquelles branches sont espacées l'une de l'autre transversalement au sens longitudinal du rail et sont reliées entre elles par une section de connexion (11a), et que les rouleaux (16a,b) du premier jeu de rouleau sont disposés respectivement de manière à pouvoir tourner sur la face intérieure des branches (13a,b).

3. Chariot selon la revendication 2, **caractérisé en ce que**, au niveau des faces intérieures des branches (13a,b), près des rouleaux (16a,b) du premier jeu de rouleau et au-delà des rouleaux (16a,b) du premier jeu des rouleaux, sont formées des premières équerres porteuses (14a,b) partant vers l'intérieur et coudées dans le sens longitudinal du rail (SLR), aux extrémités libres desquelles les rouleaux (17a,b) du deuxième jeu de rouleaux sont disposés de manière à pouvoir tourner.

4. Chariot selon la revendication 1, **caractérisé en ce que** les rouleaux (16a,b ; 17a,b) des premier et deuxième jeux de rouleaux sont disposés en symétrie miroir par rapport à un plan de symétrie vertical (E1) du chariot (10).

5. Chariot selon la revendication 4, **caractérisé en ce que** le chariot présente un troisième jeu de rouleaux comprenant un premier et un second rouleau couché (18a,b), que les rouleaux couchés (18a,b) du troisième jeu de rouleaux sont disposés les uns derrière les autres sur la face intérieure de la section de connexion (11a) dans le sens longitudinal du rail (SLR), que les axes (A3,A4) des rouleaux (18a,b) du troisième jeu de rouleaux se situent dans le plan de symétrie vertical (E1) du chariot (10), et que le premier rouleau couché (18a) est disposé plus haut à raison d'une mesure prédéterminée que le deuxième rouleau couché (18b), de sorte que, quand deux chariots se succédant (10a-f) sont poussés l'un dans l'autre en économisant de la place, le premier rouleau couché (18a) d'un chariot vient se poser sur le deuxième rouleau couché (18b) de l'autre chariot.

6. Chariot selon la revendication 5, **caractérisé en ce que** le deuxième rouleau couché (18b) est disposé de manière à pouvoir tourner directement sur la face supérieure de la section de connexion (11a), et que le premier rouleau couché (18a) est disposé de manière à pouvoir tourner à l'extrémité libre d'une seconde équerre porteuse (15) qui est réalisée de manière à partir vers l'intérieur au-delà du deuxième rouleau couché (18b) en étant coudée dans le sens longitudinal du rail (SLR) au niveau de la face intérieure de la section de connexion (11a), en particulier formée dessus.

7. Chariot selon une des revendications 1 à 6, **caractérisé en ce qu'**une section de fixation (12) est prévue au niveau du corps de chariot (11).

8. Chariot selon une des revendications 1 à 7, **caractérisé en ce que** les rouleaux du premier jeu de rouleaux (16a,b) sont réalisés sous forme d'un palier à billes autour duquel un corps de rouleau est injecté.

9. Chariot selon la revendication 8, **caractérisé en ce que** Les rouleaux du premier jeu de rouleaux (16a,b) sont plus larges que les rouleaux du deuxième jeu de rouleaux (17a,b).

10. Chariot selon la revendication 2, **caractérisé en ce que**, saillant de la première et seconde branche (13a, 13b) respectivement vers l'extérieur transversalement au sens longitudinal du rail, est disposé un élément de couplage (19a,b), en particulier en forme de tige, par l'intermédiaire duquel un engrènement sur le chariot (10) par un élément externe peut être réalisé.

11. Chariot selon une des revendications 1 à 10, **caractérisé en ce que** le corps de chariot (11) a une conformation monobloc.

12. Système de convoyage comprenant au moins un chariot (10 ; 10a-e) selon une des revendications 1 à 11, et un rail (20) adapté au chariot (10 ; 10a-e).
